# EUROPEAN PATENT APPLICATION

(11) **EP 4 575 822 A1**
(43) Date of publication of application: **25.06.2025**
(21) Application number: 24220299.2
(22) Date of filing: 16.12.2024
(51) Int. Cl.: G06F 16/242, G06N 3/08

(54) **DATA SOURCE MAPPER FOR ENHANCED DATA RETRIEVAL**

(30) Priority: 18.12.2023 US 202318543798
(71) Applicant: Intuit Inc., Mountain View, CA 94043 (US)
(72) Inventor: SHANMUGAM, Pushparaj, Mountain View, 94043 (US); Neha, KUMARI, Mountain View, 94043 (US)
(74) Representative: D Young & Co LLP

(57) **Abstract**

Aspects of the present disclosure provide techniques for enhanced electronic data retrieval. Embodiments include receiving a natural language query and identifying one or more electronic data sources indicated in the natural language query using a named entity recognition (NER) machine learning model trained through a supervised learning process based on training natural language strings associated with labels indicating entity names. Embodiments include determining one or more additional electronic data sources related to the one or more electronic data sources using a knowledge graph that maps relationships among electronic data sources. Embodiments include retrieving data related to the natural language query by transmitting requests to the one or more electronic data sources and the one or more additional electronic data sources and providing a response to the natural language query based on the data related to the natural language query.

## Description

### INTRODUCTION

Aspects of the present disclosure relate to techniques for enhanced retrieval of data from electronic data sources in response to a query. In particular, embodiments involve efficient identification of multiple data sources related to a natural language query through the use of a machine learning model and a knowledge graph for enhanced data retrieval and an improved query response.

### BACKGROUND

Every year millions of people, businesses, and organizations around the world utilize software applications to assist with countless aspects of life. Commerce in particular has been significantly impacted by advances in computing technology. Many software applications provide various commercial services, such as performing financial management and allowing users to conveniently buy and sell products and services.

Some software applications provide automated services for providing users with content, such as upon request. For example, a software application may provide a user interface by which a user can request certain types of information and/or other content (e.g., via a natural language query) and the software application may respond to the user's request with information retrieved based on the user's request. However, existing techniques for automatically responding to natural language queries are generally limited to requesting data from data sources specifically identified in the natural language queries, and may lack appropriate context for generating a useful response. Furthermore, some existing techniques involve using large language models with large numbers of parameters to analyze natural language queries and determine the type of data being requested, which is a computationally expensive process that causes delays in generating responses. In many cases, a software application may not be able to determine which data sources contain information most relevant to a natural language query and, accordingly, the response that is automatically generated may not contain the most useful information.

### BRIEF SUMMARY

The presently disclosed approaches are directed, at least in part, toward improved techniques for automatically determining applicable data sources and retrieving relevant data for responding to a natural language query.

Particular aspects are set out in the appended independent claims. Various optional embodiments are set out in the dependent claims.

Certain embodiments provide a method for enhanced electronic data retrieval. The method generally includes: receiving a natural language query via a user interface; identifying one or more electronic data sources indicated in the natural language query using a named entity recognition (NER) machine learning model trained through a supervised learning process based on training natural language strings associated with labels indicating entity names; determining one or more additional electronic data sources related to the one or more electronic data sources using a knowledge graph that maps relationships among electronic data sources; retrieving data related to the natural language query by transmitting requests to the one or more electronic data sources and the one or more additional electronic data sources; and providing a response to the natural language query via the user interface based on the data related to the natural language query.

Other embodiments comprise systems configured to perform the method set forth above as well as computer-readable mediums comprising (e.g. storing and/or conveying) instructions for performing the method set forth above.

The following description and the related drawings set forth in detail certain illustrative features of one or more embodiments.

### BRIEF DESCRIPTION OF THE DRAWINGS

The appended figures depict certain aspects of the one or more embodiments and are therefore not to be considered limiting of the scope of this disclosure.
**FIG. 1** depicts example components related to enhanced electronic data retrieval according to embodiments of the present disclosure.
**FIG. 2** depicts an example of enhanced electronic data retrieval according to embodiments of the present disclosure.
**FIG. 3** depicts an example of an enhanced syntax tree for enhanced electronic data retrieval according to embodiments of the present disclosure.
**FIG. 4** depicts an example user interface screen related to enhanced electronic data retrieval according to embodiments of the present disclosure.
**FIG. 5** depicts example operations related to enhanced electronic data retrieval according to embodiments of the present disclosure.
**FIGs. 6A** and **6B** depict example processing systems related to enhanced electronic data retrieval according to embodiments of the present disclosure.

To facilitate understanding, identical reference numerals have been used, where possible, to designate identical elements that are common to the drawings. It is contemplated that elements and features of one embodiment may be beneficially incorporated in other embodiments without further recitation.

### DETAILED DESCRIPTION

Aspects of the present disclosure provide apparatuses, methods, processing systems, and computer-readable mediums for enhanced electronic data retrieval.

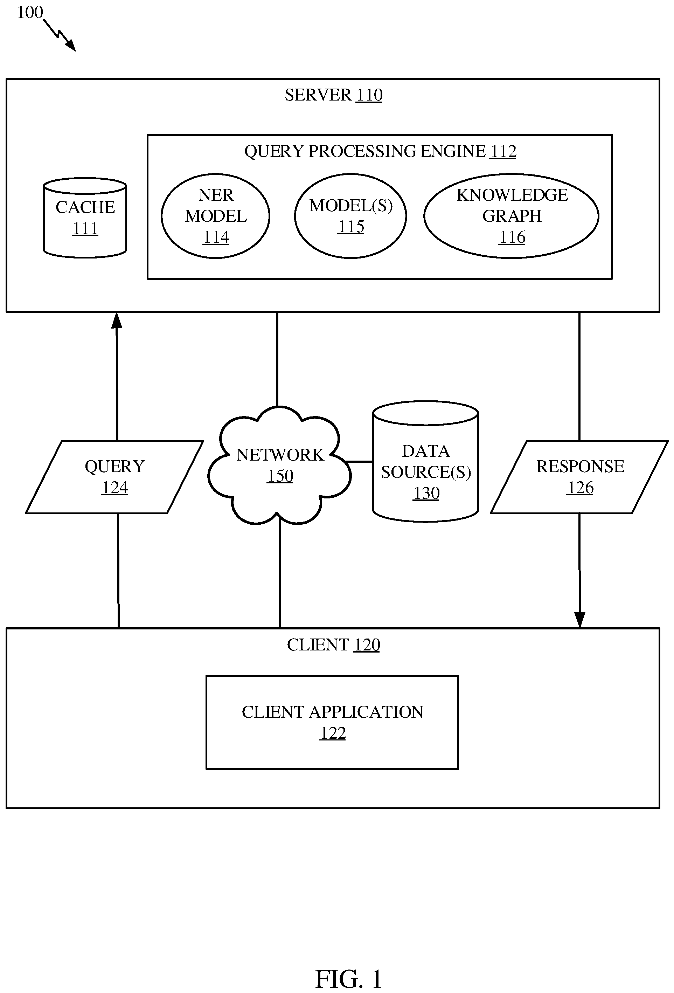

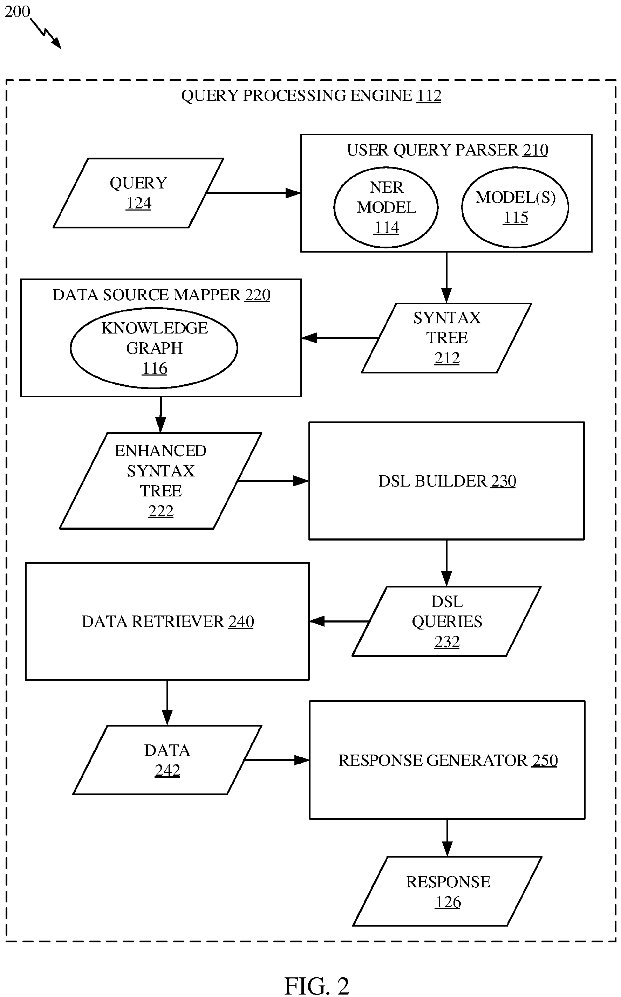

Embodiments described herein involve automatically determining electronic data sources that relevant to a natural language query through the use of an efficient machine learning model and a knowledge graph so that the relevant data can be retrieved and used to generate a response to the natural language query. As described in more detail below with respect to **FIGs. 1** and **2****,** a user may provide a natural language query requesting information or other types of content, and a query processing engine may provide the natural language query as input to a named entity recognition (NER) machine learning model. An NER model generally uses natural language processing and machine learning to identify entities that are indicated in text that is input to the model. NER models may, for example generate embeddings of input text and compare those generated embeddings to known embeddings of particular entities. It is noted that embeddings are included as an example, and an NER model may use other techniques for identifying named entities that are indicated in text without departing from the scope of the present disclosure.

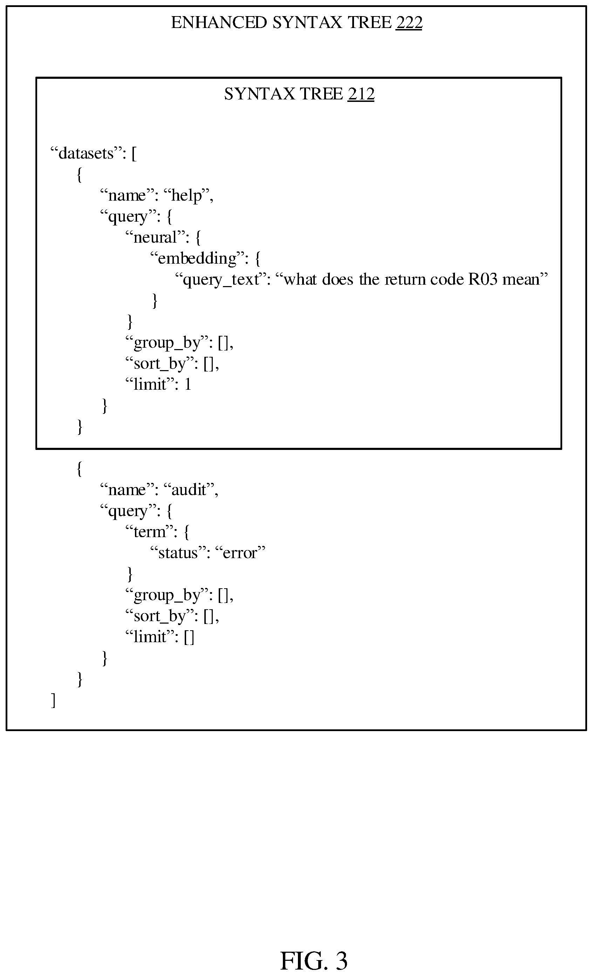

According to certain embodiments, the NER model has been trained to output a syntax tree that includes identifiers of data sources that are related to the natural language query and, in some embodiments, other details related to requesting relevant data from those data sources. For example, as described in more detail below with respect to **FIG. 3****,** the NER model may output one or more data source identifiers associated with one or more conditions specified in the natural language query, such as filtering criteria, grouping criteria, sorting criteria, and/or the like.

A knowledge graph may then be used to identify one or more additional data sources that are not directly indicated in the natural language query but that may contain information relevant to responding to the natural language query. For example, the knowledge graph may store information about relationships among data sources, semantic information about data sources (e.g., embeddings of data sources), and/or the like. In an example, the query processing engine searches through the knowledge graph to identify any other data sources that are connected to or semantically similar to the one or more data sources indicated in the output from the NER model (e.g., in some embodiments, based on embeddings of the one or more data sources). If any such data sources are identified, the semantic tree (e.g., generated using the NER model) may be enhanced with the additional data sources, as described below with respect to **FIG. 3****.**

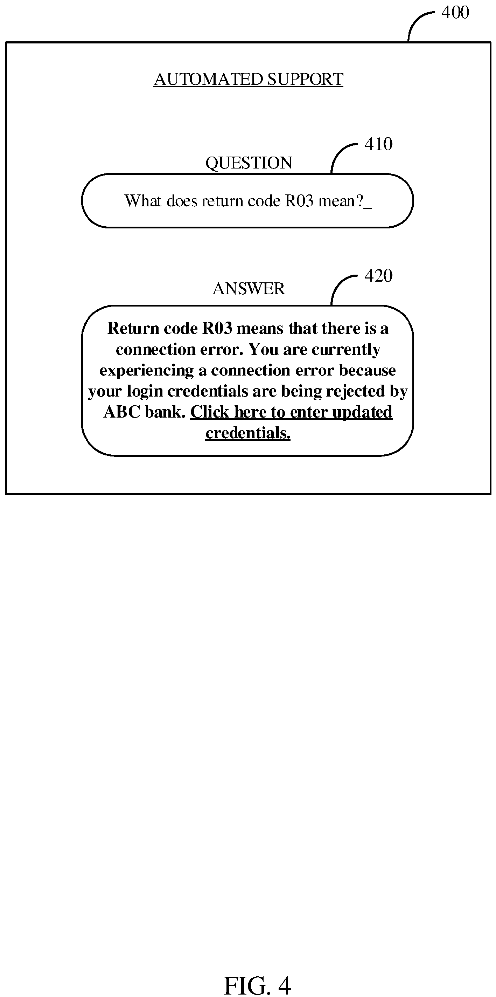

The one or more data sources identified using the NER model and the one or more additional data sources identified using the knowledge graph may then be used to retrieve data for use in responding to the natural language query. For example, queries for relevant information from each respective data source may be generated in a domain specific language (DSL) specific to that respective data source (e.g., using query templates, rules, or the like), and these queries may be submitted to the data sources in order to retrieve relevant data. As described in more detail below with respect to **FIG. 4****,** a response to the natural language query may be generated using the retrieved data, and the response may be displayed via a user interface. Generating the response may involve the use of a natural language response template, one or more machine learning models, and/or the like. In one example, the data retrieved from the one or more data sources and the one or more additional data sources is used to provide input to a machine learning model, such as a large language model (LLM). For example, a prompt may be generated based on the natural language query and the retrieved data, thus providing the LLM with contextual information beyond what was directly indicated in the natural language query. The prompt may be provided to the LLM, and the LLM may generate response to the natural language query based on the prompt. It is noted the use of an LLM is included as an example, and other techniques may be used to generate a response once the relevant data has been retrieved.

Techniques described herein improve the technical field of automated retrieval of data from electronic data sources in response to a query. For instance, by utilizing an NER machine learning model to identify electronic data sources that are indicated in a natural language query and using a knowledge graph to identify other electronic data sources related to those electronic data sources, embodiments of the present disclosure allow for automated retrieval of a larger amount of useful information for responding to the natural language query than that retrieved in conventional techniques, and therefore allow a more accurate and contextualized response to be generated. Furthermore, by utilizing an NER machine learning model, rather an LLM that has a larger number of parameters than an NER machine learning model, to identify electronic data sources relevant to a natural language query, embodiments of the present disclosure reduce the amount of computing resource utilization required for such operations and thereby improve the functioning of the computing devices involved.

Additionally, by caching relevant data and/or generated responses for natural language queries for use in responding to subsequent natural language queries as appropriate, techniques described herein further improve the functioning of the software applications and/or computing devices involved by avoiding the process of identifying relevant data sources, retrieving relevant data, and generating responses for such subsequent natural language queries. Furthermore, by improving automated responses to natural language queries through efficiently identifying a larger number of relevant data sources and retrieving relevant data from such sources for use in generating automated responses, embodiments of the present disclosure avoid computing resource utilization that would otherwise occur in connection with generating inaccurate or incomplete responses and in connection with processing subsequent natural language queries that would follow such inaccurate or incomplete responses in order to obtain additional information.

### Example Computing Components for Enhanced Electronic Data Retrieval

**FIG. 1** is an illustration 100 of example computing components related to enhanced electronic data retrieval.

Illustration 100 includes a server 110 comprising a query processing engine 112, which generally performs operations related to enhanced retrieval of electronic data, such as from one or more data source(s) 130 via network 150, relevant to generating a response 126 to a query 124 received via network 150 from client 120 so that the response 126 can be provided via a client application 122 on client 120. Server 110 also includes a cache 111, which stores relevant data and/or responses associated with historical queries for use in efficiently responding to subsequent queries that are similar to the historical queries. Cache 111 may, for example, be a key-value store including keys that represent historical queries associated with values that represent data retrieved in response to such historical queries and/or responses generated based on such historical queries.

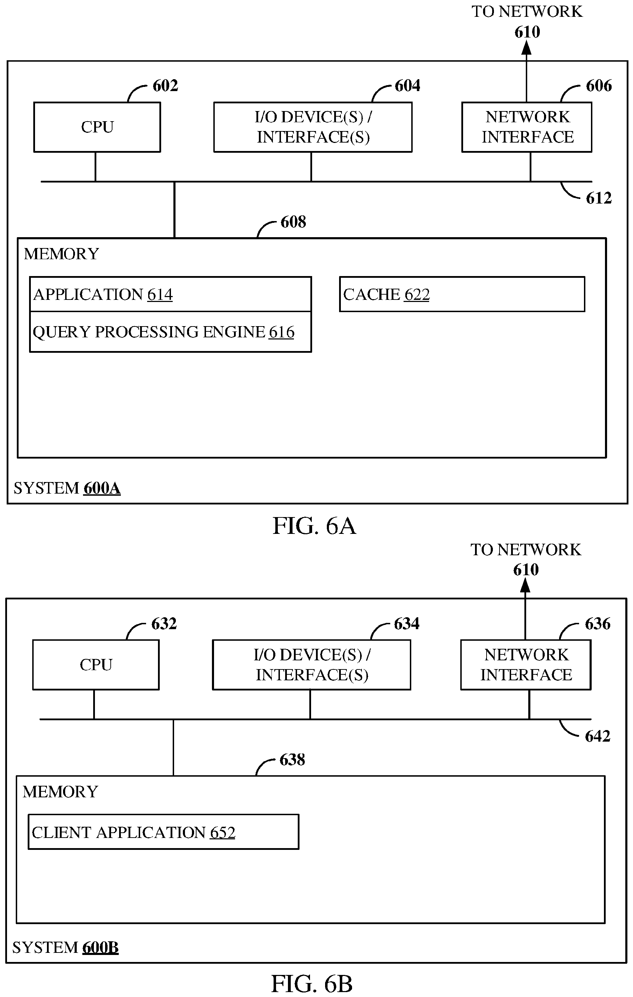

Server 110 may be a computing device such as system 600A of **FIG. 6A****,** which is described in more detail below. Query processing engine 112 generally represents a software component that utilizes a named entity recognition (NER) model 114 and, in some embodiments, one or more additional models 115, in addition to a knowledge graph 116, in order to automatically determine relevant data sources for a query 124, retrieve relevant data from such relevant data sources, and generate a response 126 to the query 124 using such retrieved relevant data. It is noted that while NER model 114, model(s) 115, and knowledge graph 116 are depicted within query processing engine 112, one or more of these models or components may alternatively be located outside of query processing engine 112 and/or outside of server 110, such as on one or more endpoints accessible by query processing engine 112 (e.g., via network 150).

There are many different types of machine learning models that can be used in embodiments of the present disclosure, such as for NER model 114 and/or model(s) 115. For example, one or more of these models may be a neural network. One or more of these models may also be an ensemble of several different individual machine learning models. Such an ensemble may be homogenous (i.e., using multiple member models of the same type) or non-homogenous (i.e., using multiple member models of different types). Individual machine learning models within such an ensemble may all be trained using the same subset of training data or may be trained using overlapping or non-overlapping subsets randomly selected from the training data, and/or may be trained for different purposes and/or using different techniques. In one example, an ensemble including multiple different types of models that perform differing functions is trained together through a unified training process, such as based on outputs produced by a final layer of the ensemble.

Neural networks, for example, generally include a collection of connected units or nodes called artificial neurons. The operation of neural networks can be modeled as an iterative process. Each node has a particular value associated with it. In each iteration, each node updates its value based upon the values of the other nodes, the update operation typically consisting of a matrix-vector multiplication. The update algorithm reflects the influences on each node of the other nodes in the network. In some cases, a neural network comprises one or more aggregation layers, such as a softmax layer.

In some embodiments, training of a machine learning model is a supervised learning process that involves providing training inputs (e.g., text strings) as inputs to a machine learning model. The machine learning model processes the training inputs and outputs predictions (e.g., indications of named entities that are indicated in the text strings) based on the training inputs. The predictions are compared to the known labels associated with the training inputs (e.g., labels manually applied to training data by experts, or automatically generated and confirmed by users or experts, indicating named entities known to be indicated in the text strings) to determine the accuracy of the machine learning model, and parameters of the machine learning model are iteratively adjusted until one or more conditions are met. For instance, the one or more conditions may relate to an objective function (e.g., a cost function or loss function) for optimizing one or more variables (e.g., model accuracy). In some embodiments, the conditions may relate to whether the predictions produced by the machine learning model based on the training inputs match the known labels associated with the training inputs or whether a measure of error between training iterations is not decreasing or not decreasing more than a threshold amount. The conditions may also include whether a training iteration limit has been reached. Parameters adjusted during training may include, for example, hyperparameters, values related to numbers of iterations, weights, functions used by nodes to calculate scores, and the like. In some embodiments, validation and testing are also performed for a machine learning model, such as based on validation data and test data, as is known in the art.

NER model 114 generally represents a machine learning model that is trained to output names of entities (e.g., electronic data sources) that are indicated in text that is input to the machine learning model. In one example implementation, NER model 114 is built based on a Bidirectional Encoder Representations from Transformers (BERT) model, which involves the use of masked language modeling to determine text embeddings. In one embodiment, NER model 114 contains such a BERT model (or, more generally, an embedding model of some sort), and uses the BERT model to generate embeddings of input text for use in determining named entities that are indicated in the text. The BERT model may, for example, be pre-trained before being used to generate NER model 114, and may be further trained or fine-tuned as part of the training of NER model 114 based on training data specific to the intended purpose of NER model 114 (e.g. identification of electronic data sources that are indicated in input text). References to training herein may also refer to fine-tuning of a model that has already been trained. For instance, training inputs representing text strings may be provided to NER model 114, and outputs produced by NER model 114 in response to the training inputs (e.g., indicating names of electronic data sources that are present in the text strings) may be compared to known labels associated with the training inputs (e.g., based on user-provided labels indicating names of electronic data sources that are present in the text strings). Parameters of NER model 114, including parameters of the BERT model or other type of embedding model, may be iteratively adjusted based on the comparing such that the BERT model is optimized along with the rest of NER model 114 for accuracy of the final output of NER model 114. It is noted that a BERT model is included as an example, and other types of machine learning models may also be used. In one example, NER model 114 includes an embedding model such as a BERT model as well as one or more additional layers, such as fully-connected layers and/or aggregation layers. In other embodiments, NER model 114 does not include an embedding model.

Model(s) 115 may include one or more other machine learning models, such as LLMs or other types of models. One or more models 116 (e.g., an LLM) may be used in some embodiments when NER model 114 is unable to successfully identify any electronic data sources that are indicated in query 124, but may not be used when NER model 114 successfully identifies one or more electronic data sources indicated in query 124. Furthermore, one or more models 116 (e.g., an LLM) may be used to generate response 126 based on data retrieved from one or more data sources 130 that were determined to be relevant to query 124 (e.g., using NER model 114).

Knowledge graph 116 generally represents a data structure that stores information about electronic data sources, including relationships among such electronic data sources. For example, knowledge graph 116 may include a plurality of nodes connected via a plurality of edges, where nodes represent electronic data sources (e.g., and, in some embodiments, other types of entities) and edges represent connections or other relationships between electronic data sources and/or other types of entities. In some embodiments, knowledge graph 116 is generated and updated over time as electronic data sources become available and/or unavailable, and as actions occur within the computing environment. In some embodiments, knowledge graph 116 includes information about a plurality of electronic data sources, such as application events (e.g., indicating user transactions and other operations performed using the application), data provided by users and/or retrieved about users, search and clickstream data, error events, market trend information, advertisement information, information about interactions with assisted support or automated support, help articles, expert content, legal agreements, social media information, business documents, data generated by machine learning model(s), and/or the like. For example, each electronic data source represented in knowledge graph 116 may provide a different type of information that can be retrieved in response to a natural language query. Relationships between electronic data sources that are indicated in knowledge graph 116 may include, for example, dependencies, semantic relationships, connectivity, and/or the like,

In one example, query 124 is a natural language request for a user's predicted profits. Query processing engine 112 may use NER model 114 to determine that query 124 includes an indication of one electronic data source, such as the user's electronic profit data. Query processing engine 112 may then use knowledge graph 116 to determine that query 124 also relates to other electronic data sources, such as based on determining that the user's electronic profit data is connected in knowledge graph 116 to market trend information, advertisement information, customer information, and/or the like. Query processing engine 112 may then retrieve relevant data from each of these electronic data sources (e.g., which may include one or more data sources 130), and may use the retrieved data to generate a response 126 to query 126. For example, the retrieved data may be used to generate a prompt to a model 115 for a profit prediction based on a variety of data points indicated in the retrieved data (which will include more data than only the user's electronic profit data, as a result of techniques described herein). The response 126 may indicate a profit prediction according to the user's request in query 124.

Response 126 and/or the retrieved data (and/or identifiers of the electronic data sources determined to be relevant to query 124) may be stored in cache 111 along with query 124 (and/or information about query 124, such as one or more embeddings of query 124). If a subsequent query is received, query processing engine 112 may determine whether there is an entry in cache 111 corresponding to the subsequent query (e.g., if the subsequent query is the same as or semantically similar, such as based on embeddings, to a previous query such as query 124 for which an entry has been stored in cache 111). If a corresponding entry in cache 111 is identified, then that entry may be used to efficiently generate a response to the subsequent query without the need to use NER model 114, model(s) 115, and/or knowledge graph 116 to identify relevant electronic data sources, and/or without the need to retrieve relevant data and/or generate a new response.

Data source(s) 130 generally represent endpoints that are accessible by query processing engine 112, such as via network 150, and that include data related to an application to which query processing engine 112 corresponds. While not shown, one or more data sources 130 may be located on server 110. Data source(s) 130 may include websites, databases, data stores, logs, online accounts, application components, and other endpoints from which electronic data may be retrieved, such as via one or more application programming interfaces (APIs) or other retrieval mechanisms.

Client 120 may be a computing device such as system 600B of **FIG. 6B****,** described in more detail below. For instance, as described in more detail below with respect to **FIG. 4****,** query 124 may be a natural language query entered by a user via a user interface associated with client application 122, and response 126 may be a natural language response that is displayed to the user via the user interface.

### Example Enhanced Electronic Data Retrieval for Automatically Responding to a Query

**FIG. 2** is an illustration 200 of an example of enhanced electronic data retrieval according to embodiments of the present disclosure. Illustration 200 includes query processing engine 112, query 124, NER model 114, model(s) 115, knowledge graph 116, and response 126 of **FIG. 1****.** Illustration 200 depicts functionality of query processing engine 112.

Within query processing engine 112, query 124 is received by a user query parser 210. User query parser 210 uses NER model 114 (and/or, in some embodiments, one or more other models 115) to identify one or more electronic data sources indicated in query 124 and to generate a syntax tree 212. An example of syntax tree 212 is described in more detail below with respect to **FIG. 3****.** For instance, query 124 may be a natural language query that includes the text "what does the return code R03 mean," and user query parser 210 may provide query 124 as input to NER model 114. NER model 114 may process query 124 and output an indication of one or more data sources that are indicated in query 124. For example syntax tree 212 may be the output of NER model 114, or may be generated based on an output from NER model 114. In some embodiments, user query parser 210 determines not to use any other model 115 to analyze query 124 based on determining that NER model 114 successfully identified one or more data sources that were indicated in query 114. Thus, user query parser 210 may avoid the larger amounts of computing resources that would otherwise be utilized in order to execute a model 115 (e.g., an LLM, which has a significantly larger number of parameters that an NER model) while still producing an accurate result.

Syntax tree 212 generally indicates one or more data sources that are indicated in query 124, and may also include other parameters (related to those one or more data sources) that are indicated in query 124. For example, syntax tree 212 may include, for each identified data source, one or more corresponding parameters for requesting data from the identified data source (e.g., filter parameters, grouping parameters, sorting parameters, numbers of results requested, and/or the like). NER model 114 may, for example, have been trained or fine-tuned to output such a syntax tree when provided with a text string. Training data used to train or fine-tune NER model 114 (e.g., through a supervised learning process as described above) may, for example, have included text strings associated with labels indicating corresponding syntax trees generated manually or generated automatically and manually confirmed.

Data source mapper 220 uses knowledge graph 116 to identify one or more additional data sources that are related to the one or more data sources indicated in syntax tree 212 (e.g., that were identified by NER model 114). For example, data source mapper 220 may map the one or more data sources indicated in syntax tree 212 to data sources represented in knowledge graph 116 (e.g., based on the names of such data sources and/or semantic information such as embeddings of such data sources), and may identify other data sources that are related to those data sources in knowledge graph 116 (and/or that are semantically related to those data sources and/or other aspects of syntax tree 212, including the query text, such as based on embeddings of the query text). In some embodiments, data source mapper 220 determines that any data source in knowledge graph that meets one or more conditions (e.g., being directly connected, related by more than a threshold number of connections, being semantically similar to based on comparing embeddings and determining that the embeddings are within a threshold cosine similarity of one another, and/or the like) with respect to the one or more data sources or other data in syntax tree 212 is sufficiently related to query 124 to be included in enhanced syntax tree 222. An example of enhanced syntax tree 222 is described below with respect to **FIG. 3****.** For example, enhanced syntax tree 222 may include syntax tree 212 augmented with information about one or more additional related data sourced identified by data source mapper 220 using knowledge graph 116 (e.g., identifiers of such data sources associated with one or more conditions for requesting data from such data sources).

A domain specific language (DSL) builder 230 may generate DSL queries 232 for retrieving data from the data sources indicated in enhanced syntax tree 222, such as according to conditions specified in enhanced syntax tree. DSL queries 232 generally represent queries that are formatted in the appropriate syntax for each respective data source, such as application programming interface (API) requests to particular APIs exposed by the data sources. DSL builder 230 may, for example, use query templates or rules to automatically generate DSL queries 232 based on enhanced syntax tree 222, such as populating templates or formats known to be associated with particular data sources using the conditions specified in enhanced syntax tree 222 for those data sources.

A data retriever 240 may retrieve relevant data from the data sources using DSL queries 232, such as submitting each DSL query 232 to its corresponding data source and receiving the requested data in response. Data retriever 240 provides the data 242 that it retrieves from the data sources to a response generator 250, which uses data 242 to generate a response 126. For example, response generator 250 may populate a natural language response template with data 242 in order to generate response 126. In other embodiments, response generator 250 generates a prompt to a machine learning model, such as an LLM, based on data 242, and response 126 is output by the machine learning model in response For example, data 242 may allow the prompt to include additional context information beyond what was originally included in query 124 so that the machine learning model can produce a more accurate, complete, and useful response 126 than would be generated with conventional techniques that do not allow for identification of relevant data sources that are not directly indicated in query 124. An example of query 124 and response 126 are described below with respect to **FIG. 4****.**

It is noted that certain aspects of the techniques described herein are optional and may potentially be omitted. For example, use of machine learning models other than NER model 114 may be omitted, and/or the like. Furthermore, the use of syntax trees specifically is an optional method of indicating data sources and conditions, and other methods of indicating data sources and conditions may also be used.

### Example Syntax Tree for Enhanced Electronic Data Retrieval

**FIG. 3** is an illustration of an example enhanced syntax tree 222 for enhanced electronic data retrieval. **FIG. 3** includes syntax tree 212 and enhanced syntax tree 222 of **FIG. 2****.**

Syntax tree 212 may be output by an NER model in response to a natural language query as described herein, or may be generated based on an output from an NER model. Syntax tree 212 indicates a data source (e.g., "dataset") named "help" that is to be queried using a query type of "neural" based on an "embedding" using the query text "what does the return code R03 mean." Syntax tree 212 further indicates that there is no "group_by" condition, no "sort_by" condition, and a "limit" of 1 (e.g., meaning that only one result is requested from the data source). Syntax tree 212 shows that the NER model determined that the natural language query was a query for help content and that the content could be retrieved from a data source called "help" which utilizes a neural network that analyzes embeddings of query text. Syntax tree 212 further shows that the NER model determined that the natural language query did not specify a grouping condition or sorting condition for the "help" data source, and that only one response from the "help" data source was requested. In one example, the "help" data source is an automated support tool that includes a machine learning model trained to accept input text and to output support information in response, such as based on embeddings of the input text.

Enhanced syntax tree 222 includes syntax tree 212 augmented with additional information. For example, enhanced syntax tree may be generated by identifying additional relevant data sources using a knowledge graph. Enhanced syntax tree 222 indicates a data source (e.g., "dataset") named "audit" that is to be queried using a query type of "term" (e.g., searching for individual search terms within the data source) for items having a "status" of "error." Enhanced syntax tree 222 further indicates that there is no "group _by" condition, no "sort _by" condition, and no "limit" (e.g., meaning that any number of results can be returned from the data source). Enhanced syntax tree 222 shows that the data source mapper determined that the "help" data source is related in the knowledge graph to a data source called "audit" that can be searched for individual search terms, and that the "audit" data source should be searched for items having a "status" indicating "error". Enhanced syntax tree 222 further shows that the data mapper determined that no grouping condition or sorting condition is needed for the "audit" data source, and that any number of results can be returned from the "audit" data source. In one example, the "audit" data source is a searchable data store that includes results of auditing one or more processes, events, or data related to a software application, such as including error events. Including the "audit" data source may allow actual error data related to the user or application to be retrieved so that the response to the user's query can include not only generic help content (e.g., retrieved from the "help" data source) but also information about the live conditions of the system (e.g., retrieved from the "audit" data source), such as an actual error that has occurred and that relates to the user's query, as described below with respect to **FIG. 4**/

### Improved User Interface Screen Related to Enhanced Electronic Data Retrieval

**FIG. 4** illustrates an example user interface screen 400 related to enhanced electronic data retrieval. For example, user interface screen 400 may correspond to client application 122 of **FIG. 1****.**

User interface screen 400 represents a screen of a graphical user interface associated with a software application. For example, a user may interact with user interface screen 400 to request and receive automated support related to use of the application.

A question field 410 allows the user to input a natural language query, such as in text form. Other forms of input may also be used, such as voice input. In the depicted example, the user has input the natural language query "What does the return code R03 mean?" The user may have submitted this natural language query after receiving the return code R03 during use of the application.

An answer field 420 displays a response to the user's query. For example, the response may have been generated as described herein through the use of an NER model and a knowledge graph to automatically and efficiently identify relevant data sources from which to retrieve data related to the query. In the depicted example, the response states that "Return code R03 means that there is a connection error. You are currently experiencing a connection error because your login credentials are being rejected by ABC bank. Click here to enter updated credentials." For example, the "help" data source may have returned a response indicating that the return code R03 means that there is a connection error. The "audit" data source may have returned a response indicating that a connection error occurred with a threshold amount of time prior to the user's query and that the connection error resulted from the user's stored login credentials to "ABC bank" being rejected. Thus, the data returned by both the "help" and the "audit" data sources may have been provided as context with a prompt to an LLM along with the user's query, and the LLM may have generated the response shown in answer field 420 based on the context included with the prompt. The response may include a link (e.g., associated with the "click here" text) to an application page at which the user can update the stored credentials for ABC bank (e.g., which may have changed since the user provided the stored credentials).

Retrieving the actual error data from the "audit" data source in addition to the support content from the "help" data source allows the response to include more accurate and complete information, informing the user of the cause of the specific error that the user is experiencing and how to fix that error rather than only providing a generic explanation that the return code means that there is a connection error.

It is noted that user interface screen 400 is included as an example, and other methods of receiving queries and providing responses may be employed without departing from the scope of the present disclosure. For example, queries and responses may be provided via audio, email, text message, phone call, social media, and/or the like.

### Example Operations for Enhanced Electronic Data Retrieval

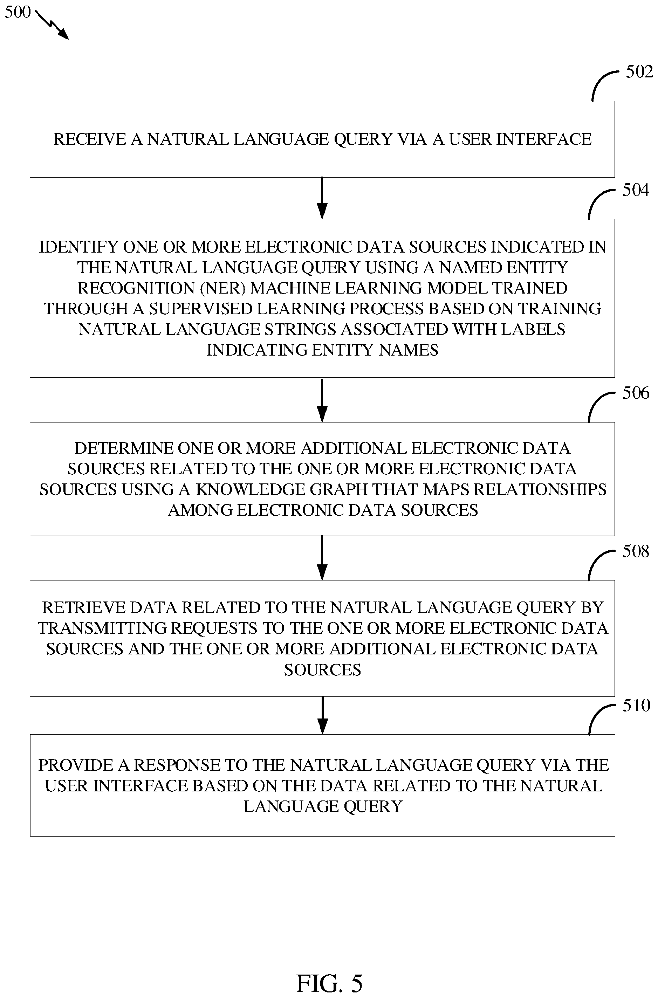

**FIG. 5** depicts example operations 500 for enhanced electronic data retrieval. For example, operations 500 may be performed by server 110 of **FIG. 1****.**

Operations 500 begin at step 502, with receiving a natural language query via a user interface.

Operations 500 continue at step 504, with identifying one or more electronic data sources indicated in the natural language query using a named entity recognition (NER) machine learning model trained through a supervised learning process based on training natural language strings associated with labels indicating entity names.

In some embodiments, the identifying of the one or more electronic data sources indicated in the natural language query using the NER machine learning model comprises providing the natural language query as an input to the NER machine learning model and receiving, as an output from the NER machine learning model in response to the input, a syntax tree indicating names of the one or more electronic data sources. In certain embodiments, the identifying of the one or more electronic data sources indicated in the natural language query using the NER machine learning model further comprises mapping the names of the one or more electronic data sources to addresses of the one or more data sources.

The syntax tree may further indicate one or more of a filter condition, an aggregation condition, or a sorting condition.

Operations 500 continue at step 506, with determining one or more additional electronic data sources related to the one or more electronic data sources using a knowledge graph that maps relationships among electronic data sources.

Operations 500 continue at step 508, with retrieving data related to the natural language query by transmitting requests to the one or more electronic data sources and the one or more additional electronic data sources. In some embodiments, the transmitting of the requests to the one or more electronic data sources and the one or more additional electronic data sources is based on the filter condition, the aggregation condition, or the sorting condition.

Some embodiments further comprise generating the requests based on request templates associated with the one or more electronic data sources and the one or more additional electronic data sources. Certain embodiments further comprise generating the requests in domain specific languages associated with the one or more electronic data sources and the one or more additional electronic data sources.

Operations 500 continue at step 510, with providing a response to the natural language query via the user interface based on the data related to the natural language query.

Some embodiments further comprise generating the response by populating a response template based on the data related to the natural language query. Certain embodiments further comprise determining not to use a large language model (LLM) to process the natural language query based on determining that the NER machine learning model successfully identified the one or more data sources indicated in the natural language query. The LLM may have a larger number of parameters than the NER machine learning model.

Some embodiments further comprise storing an entry in a cache based on the natural language query and the data related to the natural language query. For example, certain embodiments further comprise responding to a subsequent natural language query based on the entry in the cache without using the NER machine learning model to process the subsequent natural language query and without transmitting any requests to any data sources based on the subsequent natural language query.

Notably, method 500 is just one example with a selection of example steps, but additional methods with more, fewer, and/or different steps are possible based on the disclosure herein.

### Example Computing Systems

**FIG. 6A** illustrates an example system 600 with which embodiments of the present disclosure may be implemented. For example, system 600A may correspond to server 110 of **FIG. 1****,** and may be configured to perform one or more of operations 500 of **FIG. 5****.**

System 600A includes a central processing unit (CPU) 602, one or more I/O device interfaces 604 that may allow for the connection of various I/O devices 614 (e.g., keyboards, displays, mouse devices, pen input, etc.) to the system 600A, network interface 606, a memory 608, and an interconnect 612. It is contemplated that one or more components of system 600A may be located remotely and accessed via a network 610. It is further contemplated that one or more components of system 600A may comprise physical components or virtualized components.

CPU 602 may retrieve and execute programming instructions stored in the memory 608. Similarly, the CPU 602 may retrieve and store application data residing in the memory 608. The interconnect 612 transmits programming instructions and application data, among the CPU 602, I/O device interface 604, network interface 606, and memory 608. CPU 602 is included to be representative of a single CPU, multiple CPUs, a single CPU having multiple processing cores, and other arrangements.

Additionally, the memory 608 is included to be representative of a random access memory or the like. In some embodiments, memory 608 may comprise a disk drive, solid state drive, or a collection of storage devices distributed across multiple storage systems. Although shown as a single unit, the memory 608 may be a combination of fixed and/or removable storage devices, such as fixed disc drives, removable memory cards or optical storage, network attached storage (NAS), or a storage area-network (SAN).

As shown, memory 608 includes an application 614, which may be a software application that provides automated support functionality, such as allowing a user to submit a natural language query and providing a response as described herein. Memory 608 further includes query processing engine 616 and cache 622, which may correspond to query processing engine 112 and cache 111 of **FIG. 1****.**

**FIG. 6B** illustrates another example system 600B with which embodiments of the present disclosure may be implemented. For example, system 600B may correspond to client 120 of **FIG. 1****,** and may be configured to display user interface screen 400 of **FIG. 4****.**

System 600B includes a CPU 632, one or more I/O device interfaces 634 that may allow for the connection of various I/O devices 634 (e.g., keyboards, displays, mouse devices, pen input, etc.) to the system 600B, network interface 636, a memory 638, and an interconnect 642. It is contemplated that one or more components of system 600B may be located remotely and accessed via a network 610. It is further contemplated that one or more components of system 600B may comprise physical components or virtualized components.

CPU 632 may retrieve and execute programming instructions stored in the memory 638. Similarly, the CPU 632 may retrieve and store application data residing in the memory 638. The interconnect 642 transmits programming instructions and application data, among the CPU 632, I/O device interface 634, network interface 636, and memory 638. CPU 632 is included to be representative of a single CPU, multiple CPUs, a single CPU having multiple processing cores, and other arrangements.

Additionally, the memory 638 is included to be representative of a random access memory or the like. In some embodiments, memory 638 may comprise a disk drive, solid state drive, or a collection of storage devices distributed across multiple storage systems. Although shown as a single unit, the memory 638 may be a combination of fixed and/or removable storage devices, such as fixed disc drives, removable memory cards or optical storage, network attached storage (NAS), or a storage area-network (SAN).

As shown, memory 638 includes a client application 652, which may correspond to client application 122 of **FIG. 1****.**

### Additional Considerations

The preceding description provides examples, and is not limiting of the scope, applicability, or embodiments set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

The preceding description is provided to enable any person skilled in the art to practice the various embodiments described herein. Various modifications to these embodiments will be readily apparent to those skilled in the art, and the generic principles defined herein may be applied to other embodiments. For example, changes may be made in the function and arrangement of elements discussed without departing from the scope of the disclosure. Various examples may omit, substitute, or add various procedures or components as appropriate. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

As used herein, a phrase referring to "at least one of' a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and other operations. Also, "determining" may include receiving (e.g., receiving information), accessing (e.g., accessing data in a memory) and other operations. Also, "determining" may include resolving, selecting, choosing, establishing and other operations.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

A processing system may be implemented with a bus architecture. The bus may include any number of interconnecting buses and bridges depending on the specific application of the processing system and the overall design constraints. The bus may link together various circuits including a processor, machine-readable media, and input/output devices, among others. A user interface (e.g., keypad, display, mouse, joystick, etc.) may also be connected to the bus. The bus may also link various other circuits such as timing sources, peripherals, voltage regulators, power management circuits, and other types of circuits, which are well known in the art, and therefore, will not be described any further. The processor may be implemented with one or more general-purpose and/or special-purpose processors. Examples include microprocessors, microcontrollers, DSP processors, and other circuitry that can execute software. Those skilled in the art will recognize how best to implement the described functionality for the processing system depending on the particular application and the overall design constraints imposed on the overall system.

If implemented in software, the functions may be stored or transmitted over as one or more instructions or code on a computer-readable medium. Software shall be construed broadly to mean instructions, data, or any combination thereof, whether referred to as software, firmware, middleware, microcode, hardware description language, or otherwise. Computer-readable media include both computer storage media and communication media, such as any medium that facilitates transfer of a computer program from one place to another. The processor may be responsible for managing the bus and general processing, including the execution of software modules stored on the computer-readable storage media. A computer-readable storage medium (such as a medium that may be identified as being "non-transitory") may be coupled to a processor such that the processor can read information from, and write information to, the storage medium. In the alternative, the storage medium may be integral to the processor. By way of example, the computer-readable media may include a transmission line, a carrier wave modulated by data, and/or a computer readable storage medium with instructions stored thereon separate from the wireless node, all of which may be accessed by the processor through the bus interface. Alternatively, or in addition, the computer-readable media, or any portion thereof, may be integrated into the processor, such as the case may be with cache and/or general register files. Examples of machine-readable storage media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product.

A software module may comprise a single instruction, or many instructions, and may be distributed over several different code segments, among different programs, and across multiple storage media. The computer-readable media may comprise a number of software modules. The software modules include instructions that, when executed by an apparatus such as a processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module, it will be understood that such functionality is implemented by the processor when executing instructions from that software module.

Therefore, from one perspective, there have been described approaches for enhanced electronic data retrieval. Embodiments include receiving a natural language query and identifying one or more electronic data sources indicated in the natural language query using a named entity recognition (NER) machine learning model trained through a supervised learning process based on training natural language strings associated with labels indicating entity names. Embodiments include determining one or more additional electronic data sources related to the one or more electronic data sources using a knowledge graph that maps relationships among electronic data sources. Embodiments include retrieving data related to the natural language query by transmitting requests to the one or more electronic data sources and the one or more additional electronic data sources and providing a response to the natural language query based on the data related to the natural language query.

Further examples of feature combinations taught by the present disclosure are set out in the following numbered clauses.

Clause 1. A method for enhanced electronic data retrieval, comprising: receiving a natural language query via a user interface; identifying one or more electronic data sources indicated in the natural language query using a named entity recognition (NER) machine learning model trained through a supervised learning process based on training natural language strings associated with labels indicating entity names; determining one or more additional electronic data sources related to the one or more electronic data sources using a knowledge graph that maps relationships among electronic data sources; retrieving data related to the natural language query by transmitting requests to the one or more electronic data sources and the one or more additional electronic data sources; and providing a response to the natural language query via the user interface based on the data related to the natural language query.

Clause 2. The method of clause 1, wherein the identifying of the one or more electronic data sources indicated in the natural language query using the NER machine learning model comprises: providing the natural language query as an input to the NER machine learning model; and receiving, as an output from the NER machine learning model in response to the input, a syntax tree indicating names of the one or more electronic data sources.

Clause 3. The method of clause 2, wherein the identifying of the one or more electronic data sources indicated in the natural language query using the NER machine learning model further comprises mapping the names of the one or more electronic data sources to addresses of the one or more electronic data sources.

Clause 4. The method of clause 2 or 3, wherein the syntax tree further indicates one or more of: a filter condition; an aggregation condition; or a sorting condition.

Clause 5. The method of clause 4, wherein the transmitting of the requests to the one or more electronic data sources and the one or more additional electronic data sources is based on the filter condition, the aggregation condition, or the sorting condition.

Clause 6. The method of any preceding clause, further comprising generating the requests based on request templates associated with the one or more electronic data sources and the one or more additional electronic data sources.

Clause 7. The method of any preceding clause, further comprising generating the requests in domain specific languages associated with the one or more electronic data sources and the one or more additional electronic data sources.

Clause 8. The method of any preceding clause, further comprising generating the response by populating a response template based on the data related to the natural language query.

Clause 9. The method of any preceding clause, further comprising determining not to use a large language model (LLM) to process the natural language query based on determining that the NER machine learning model successfully identified the one or more electronic data sources indicated in the natural language query.

Clause 10. The method of clause 9, wherein the LLM has a larger number of parameters than the NER machine learning model.

Clause 11. The method of any preceding clause, further comprising storing an entry in a cache based on the natural language query and the data related to the natural language query.

Clause 12. The method of clause 11, further comprising responding to a subsequent natural language query based on the entry in the cache without using the NER machine learning model to process the subsequent natural language query and without transmitting any requests to any data sources based on the subsequent natural language query.

Clause 13. A system for enhanced electronic data retrieval, comprising: one or more processors; and a memory storing instructions that, when executed by the one or more processors, cause the system to: receive a natural language query via a user interface; identify one or more electronic data sources indicated in the natural language query using a named entity recognition (NER) machine learning model trained through a supervised learning process based on training natural language strings associated with labels indicating entity names; determine one or more additional electronic data sources related to the one or more electronic data sources using a knowledge graph that maps relationships among electronic data sources; retrieve data related to the natural language query by transmitting requests to the one or more electronic data sources and the one or more additional electronic data sources; and provide a response to the natural language query via the user interface based on the data related to the natural language query.

Clause 14. The system of clause 13, wherein the identifying of the one or more electronic data sources indicated in the natural language query using the NER machine learning model comprises: providing the natural language query as an input to the NER machine learning model; and receiving, as an output from the NER machine learning model in response to the input, a syntax tree indicating names of the one or more electronic data sources.

Clause 15. The system of clause 14, wherein the identifying of the one or more electronic data sources indicated in the natural language query using the NER machine learning model further comprises mapping the names of the one or more electronic data sources to addresses of the one or more electronic data sources.

Clause 16. The system of clause 14 or 15, wherein the syntax tree further indicates one or more of: a filter condition; an aggregation condition; or a sorting condition.

Clause 17. The system of clause 16, wherein the transmitting of the requests to the one or more electronic data sources and the one or more additional electronic data sources is based on the filter condition, the aggregation condition, or the sorting condition.

Clause 18. The system of any of clauses 13 to 17, wherein the instructions, when executed by the one or more processors, further cause the system to generate the requests based on request templates associated with the one or more electronic data sources and the one or more additional electronic data sources.

Clause 19. The system of any of clauses 13 to 18, wherein the instructions, when executed by the one or more processors, further cause the system to generate the requests in domain specific languages associated with the one or more electronic data sources and the one or more additional electronic data sources.

Clause 20. A computer readable medium comprising instructions that, when executed by one or more processors of a computing system, cause the computing system to: receive a natural language query via a user interface; identify one or more electronic data sources indicated in the natural language query using a named entity recognition (NER) machine learning model trained through a supervised learning process based on training natural language strings associated with labels indicating entity names; determine one or more additional electronic data sources related to the one or more electronic data sources using a knowledge graph that maps relationships among electronic data sources; retrieve data related to the natural language query by transmitting requests to the one or more electronic data sources and the one or more additional electronic data sources; and provide a response to the natural language query via the user interface based on the data related to the natural language query.

The following claims are not intended to be limited to the embodiments shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more. No claim element is to be construed under the provisions of 35 U.S.C. §112(f) unless the element is expressly recited using the phrase "means for" or, in the case of a method claim, the element is recited using the phrase "step for." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

## Claims

1. A method for enhanced electronic data retrieval, comprising:
receiving a natural language query via a user interface;
identifying one or more electronic data sources indicated in the natural language query using a named entity recognition (NER) machine learning model trained through a supervised learning process based on training natural language strings associated with labels indicating entity names;
determining one or more additional electronic data sources related to the one or more electronic data sources using a knowledge graph that maps relationships among electronic data sources;
retrieving data related to the natural language query by transmitting requests to the one or more electronic data sources and the one or more additional electronic data sources; and
providing a response to the natural language query via the user interface based on the data related to the natural language query.

2. The method of Claim 1, wherein the identifying of the one or more electronic data sources indicated in the natural language query using the NER machine learning model comprises:
providing the natural language query as an input to the NER machine learning model; and
receiving, as an output from the NER machine learning model in response to the input, a syntax tree indicating names of the one or more electronic data sources.

3. The method of Claim 2, wherein the identifying of the one or more electronic data sources indicated in the natural language query using the NER machine learning model further comprises mapping the names of the one or more electronic data sources to addresses of the one or more electronic data sources.

4. The method of Claim 2 or 3, wherein the syntax tree further indicates one or more of:
a filter condition;
an aggregation condition; or
a sorting condition.

5. The method of Claim 4, wherein the transmitting of the requests to the one or more electronic data sources and the one or more additional electronic data sources is based on the filter condition, the aggregation condition, or the sorting condition.

6. The method of any preceding Claim, further comprising generating the requests based on request templates associated with the one or more electronic data sources and the one or more additional electronic data sources.

7. The method of any preceding Claim, further comprising generating the requests in domain specific languages associated with the one or more electronic data sources and the one or more additional electronic data sources.

8. The method of any preceding Claim, further comprising generating the response by populating a response template based on the data related to the natural language query.

9. The method of any preceding Claim, further comprising determining not to use a large language model (LLM) to process the natural language query based on determining that the NER machine learning model successfully identified the one or more electronic data sources indicated in the natural language query.

10. The method of Claim 9, wherein the LLM has a larger number of parameters than the NER machine learning model.

11. The method of any preceding Claim, further comprising storing an entry in a cache based on the natural language query and the data related to the natural language query.

12. The method of Claim 11, further comprising responding to a subsequent natural language query based on the entry in the cache without using the NER machine learning model to process the subsequent natural language query and without transmitting any requests to any data sources based on the subsequent natural language query.

13. A system for enhanced electronic data retrieval, comprising:
one or more processors; and
a memory storing instructions that, when executed by the one or more processors, cause the system to:
receive a natural language query via a user interface;
identify one or more electronic data sources indicated in the natural language query using a named entity recognition (NER) machine learning model trained through a supervised learning process based on training natural language strings associated with labels indicating entity names;
determine one or more additional electronic data sources related to the one or more electronic data sources using a knowledge graph that maps relationships among electronic data sources;
retrieve data related to the natural language query by transmitting requests to the one or more electronic data sources and the one or more additional electronic data sources; and
provide a response to the natural language query via the user interface based on the data related to the natural language query.

14. The system of Claim 13, further configured to include the functionality defined in to any of claims 2 to 12.

15. A computer readable medium comprising instructions that, when executed by one or more processors of a computing system, cause the computing system to carry out the method of any of claims 1 to 12.
